# EUROPEAN PATENT SPECIFICATION

(11) **EP 1 319 823 B1**
(45) Date of publication and mention of the grant of the patent: **30.08.2006**
(21) Application number: 02009900.8
(22) Date of filing: 02.05.2002
(51) Int. Cl.: F02K 9/34, B29C 53/58

(54) **Method of producing an insultated rocket engine casing and insulated casing produced in this way**
Methode zur Herstellung eines isolierten Raketengehäuses und entsprechendes Raketenghäuse
Méthode de production d' un boîtier isolé pour un moteur de fusée et boîtier fabriqué selon cette méthode

(30) Priority: 12.12.2001 IT TO20011161
(43) Date of publication of application: 18.06.2003
(73) Proprietor: AVIO S.p.A., 10135 Torino (IT); Agenzia Spaziale Italiana, 00198 Roma (IT)
(72) Inventor: Fazio, Enrico, 00156 Roma (IT); Bellomi, Paolo, 00128 Roma (IT)
(74) Representative: Jorio, Paolo

(56) References cited:
- EP-A- 0 094 805
- EP-A- 0 410 852
- EP-A- 0 538 530
- FR-A- 1 282 930
- FR-A- 2 614 651
- US-A- 2 479 828
- US-A- 4 655 866
- US-A- 4 909 880
- US-A- 5 145 543

## Description

The present invention relates to a method of producing an insulated casing for a solid-propellant rocket engine.

As is known, rocket engines comprise a substantially cylindrical casing filled with solid propellant; a propellant ignition device; and an end nozzle by which the burning propellant generates thrust. The casing is made of steel or composite material, e.g. carbon fibers or fibers of a material known as kevlar (registered trademark), and is lined with a layer of ablative material defined substantially by rubber with additives, and which thermally protects the casing during combustion of the propellant.

To produce an engine with a composite-material casing (so-called "filament wound motor"), the rubber is first deposited on the outer surface of a decomposable core negatively reproducing the shape of the finished casing, and is then set by curing.

The composite-material fibers are then wound on; the composite material is set by further curing; and, finally, the core is disassembled and removed to free the cavity in which to insert the solid propellant.

Being relatively liquid, the uncured rubber is applied by means of a coating head, which is moved over, and maintained a given constant distance from, the outer surface of the core, so as to apply and press the rubber about the core. Since the axial ends of the core are dome-shaped, the coating head has at least two degrees of freedom to trace the full curvature of the outer surface of the core.

An example of the above mentioned known solutions is disclosed in EP-A-0 094 805, regarding a method of making an elastomer lined composite vessel or portion of such vessel. The method comprises the step of causing a thin, tacky ribbon comprising an elastomer (preferably curable) to continuously encircle a center rotational axis of a mandrel. Segments of the ribbon, which are wound substantially circumferentially relative to the center rotational axis, are adjacently positioned and tacked together integral, thereby forming a layer of the elastomer about the mandrel. The method also comprises the step of applying a shell comprising filaments and thermosettable resin to the layer of elastomer; and the step of curing the thermosettable resin.

Known solutions of the type described are unsatisfactory on account of the widely varying radial thickness of the rubber applied to the core, which may vary from one part of the core to another, and from one application to another, so that, frequently, part of the rubber must be removed by machining after curing to achieve the precise required dimensions.

This is mainly due to the tendency of the rubber, as it is applied to the core, to deform under stress, and in particular any tensile stress produced during application, e.g. as the rubber is applied to the dome-shaped ends, or when the movement of the coating head is not synchronized accurately with rotation of the core.

Moreover, complex actuating and control systems are required to enable tracing of different-shaped cores by the coating head without interference, and to synchronize the coating head with rotation of the core to achieve a coating of as even a thickness as possible regardless of the shape of the core.

It is an object of the present invention to provide a method of producing a rocket engine insulated casing, designed to provide a cheap, simple solution to the aforementioned problems.

According to the present invention, there is provided a method of producing a rocket engine insulated casing; the method comprising the step of forming a heat-insulating annular layer by applying a heat-shielding material to the outer surface of a core; wherein the step of forming a heat-insulating layer includes the step of forming a strip comprising said heat-shielding material and substantially inextensible in at least the longitudinal extension direction of the strip; said heat-shielding material being applied by winding said strip about said core and tensioning said strip during winding.

More specifically, said strip is wound by rotating said core about an axis, and by exerting retaining action on said strip in the opposite direction to the rotation direction of said core.

Preferably, said strip is formed by mating a band of uncured heat-shielding material, and reinforcing means substantially inextensible in said longitudinal direction; and, conveniently, by forming a fiber structure extending in said longitudinal direction and forming at least part of said reinforcing means, and by combining said fiber structure and said band of uncured heat-shielding material.

The present invention also relates to a rocket engine insulated casing.

According to the present invention, there is provided a rocket engine insulated casing; the insulated casing comprising an outer shell made of composite material, and a heat-insulating inner annular layer comprising a heat-shielding material; and being characterized by also comprising reinforcing means for reinforcing said heat-shielding material; said reinforcing means being continuous circumferentially, and being embedded in said heat-shielding material.

A non-limiting embodiment of the invention will be described by way of example with reference to the accompanying drawings, in which:
Figure 1 shows a partly-sectioned view of a rocket engine insulated casing in accordance with a preferred embodiment of the method according to the present invention;
Figures 2 and 3 show larger-scale, partly-sectioned, schematic views of steps in the method of producing the insulated casing in Figure 1;
Figure 4 shows a schematic view in perspective of a strip used to implement the method in Figures 2 and 3;
Figure 5 shows a section of a variation of the Figure 4 strip.

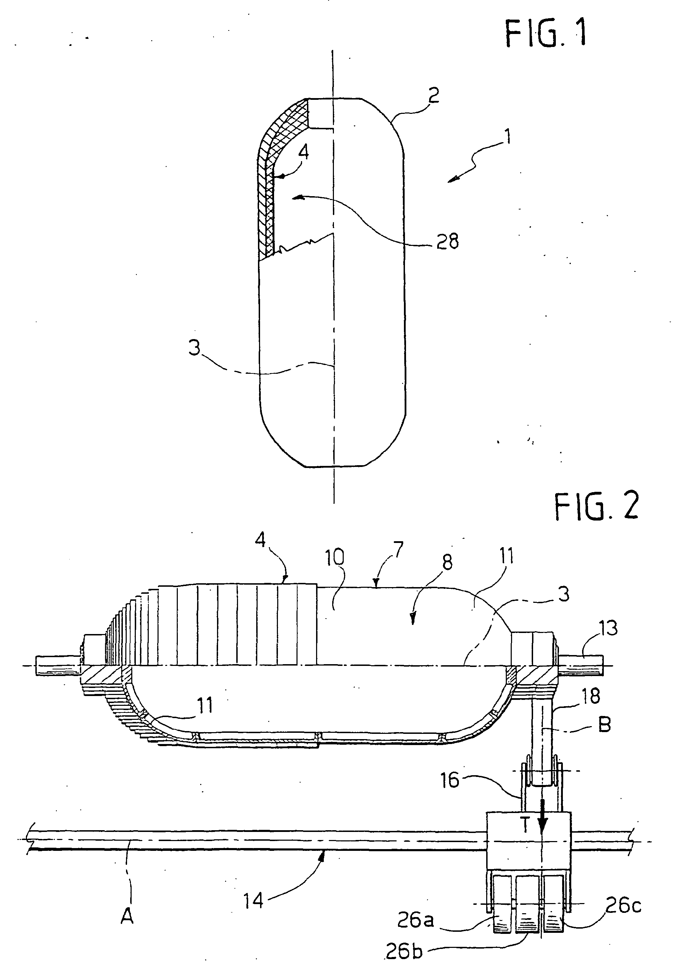

Number 1 in Figure 1 indicates a rocket engine insulated casing.

Insulated casing 1 is filled with solid propellant, and comprises a substantially cylindrical, rigid outer shell 2 extending along an axis 3 and made of composite material, e.g. carbon fibers or fibers of a material known as kevlar (registered trademark).

Insulated casing 1 also comprises an insulating layer 4 lining the inner surface of shell 2 and comprising ablative material for thermal protection of shell 2 during combustion of the propellant.

As shown in Figure 2, to form insulated casing 1, the ablative material is applied to the outer surface 7 of a core 8, which negatively reproduces the shape of insulated casing 1, is decomposable in known manner (not shown) for removal once insulated casing 1 is formed, and comprises a cylindrical intermediate axial portion 10, and two dome-shaped opposite axial end portions 11.

Core 8 is fitted in a fixed position to a shaft 13 extending along axis 3, and which is powered in known manner (not shown) to rotate about axis 3, and forms part of a winding machine 14 (shown partly).

Machine 14 also comprises a winding head 16, which is positioned radially apart from core 8, and is powered in known manner (not shown) to move linearly with respect to core 8 in a direction A parallel to axis 3, and to wind a strip 18 on to surface 7.

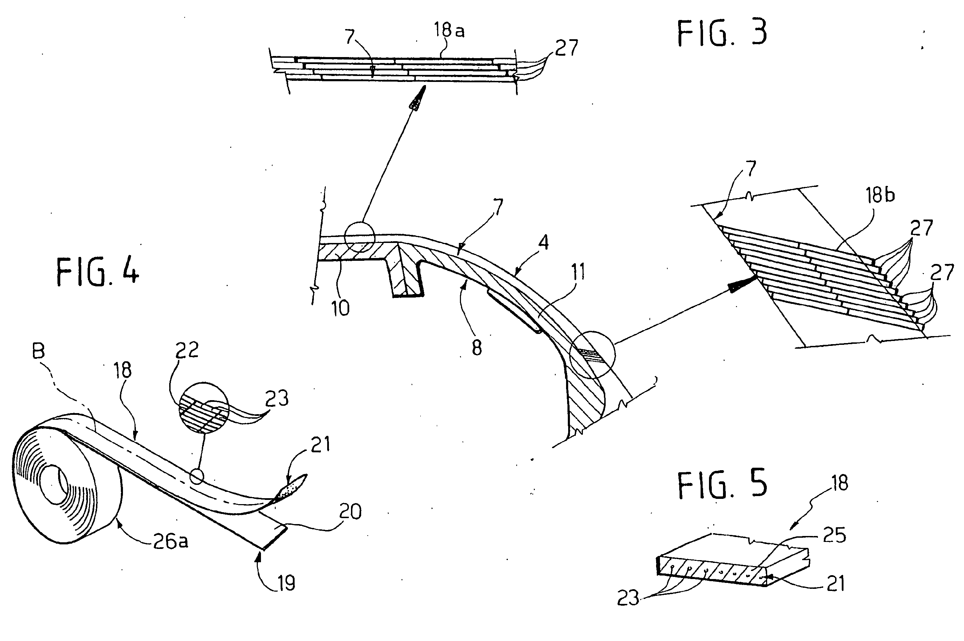

As shown in Figure 4, strip 18 comprises a band 19 of uncured rubber or ablative material 20; and a fabric band 21, which is substantially inextensible in the longitudinal extension direction B of strip 18, and is superimposed on band 19 to make strip 18 substantially inextensible in direction B.

Here and hereinafter, band 21 or strip 18 "substantially inextensible" in direction B is intended to mean an element with a maximum of 3% stretch, and therefore shrinkage, when subjected, in direction B, to a load of 100 N/5cm (newtons per 5 centimeters of width). At the same time, band 21 and strip 18 have a tensile strength, in direction B, of at least 200 N/5cm.

As shown in figure 4, band 21 comprises a number of transverse fibers 22 of such resistance as to only define the width of band 21 and strip 18; and a number of continuous one-way fibers 23, which are parallel in direction B, are arranged side by side to form a tight weave with respect to that of fibers 22, and in particular are defined by para-aramadic fibers, e.g. fibers of a material known as kevlar (registered trademark).

Strip 18 is formed by producing the fabric of band 21; rolling the uncured rubber into a sheet (not shown); performing a second rolling operation to superimpose and produce adhesion of the fabric and the rubber sheet; and, finally, cutting the resulting product in a predetermined direction into strips 18 of the desired width.

In the Figure 5 variation, strip 18 is formed by embedding the fabric band 21 in a band 25 of uncured rubber, e.g. by feeding the fabric of band 21 between two sheets of uncured rubber, and then rolling, so that the rubber sheets and the fabric sandwiched in between adhere to one another.

With reference to Figures 2 and 4, once formed, strips 18 of different lengths are wound into a number of reels 26a, 26b, 26c, which are fitted to machine 14 to feed strips 18 to head 16. Each strip 18 is applied to core 8 in a number of superimposed windings 27 (Figure 3), and is tensioned by exerting retaining action T on strip 18 tangentially with respect to core 8 and in the opposite direction to the rotation direction of core 8 about axis 3.

More specifically, as shown in Figure 3, layer 4 is formed by winding a strip 18a on to portion 10, and a strip 18b, narrower than strip 18a, on to portions 11.

Once layer 4 is cured to set rubber 20, fibers 23 are embedded in rubber 20, are continuous circumferentially, and impart strength and compactness to layer 4. More specifically, during curing, which includes firing, the core 8 material tends to expand, whereas para-aramidic fibers 23, having a negative thermal expansion coefficient, i.e. opposite that of core 8, tend to shrink and concentrate in a region adjacent to surface 7. With reference to insulated casing 1 (Figure 1), fibers 23 therefore concentrate in an annular region adjacent to the inner cavity 28 to be filled with propellant, thus improving the ablative characteristics of layer 4 in that region.

To form shell 2, a composite fiber material (not shown) is then wound on to layer 4 using the same machine 14 and simply replacing head 16 with a special winding head (not shown); and a second curing operation is performed to make the composite material of shell 22 compact.

As an alternative to two curing operations, the composite fiber material may be wound on to an uncured layer 4, and a single curing operation performed to set rubber 20 and simultaneously compact shell 2. In which case, fibers 23 tend to retain and so prevent the uncured rubber 20 from seeping radially through the composite-material fibers before shell 2 is fully compacted. Conversely, without fibers 23, the thermal expansion of core 8 would tend to compress and so "squeeze" the uncured rubber 20 radially through the composite-material fibers, thus resulting in a "hedgehog" appearance of insulated casing 1, which would be totally unusable.

Once the composite material of shell 2 is cured, core 8 is disassembled and removed, and the inner cavity 28 of the insulated casing 1 so formed is filled with solid propellant; and a propellant ignition device (not shown) and a propulsion nozzle (not shown) are connected to insulated casing 1 to form the rocket engine.

Strip 18 is therefore substantially inextensible in direction B, can withstand relatively severe one-way pull in direction B, and can therefore be tensioned as it is wound on to core 8 to form a layer 4 of uniform radial thickness along surface 7, which can be reproduced consistently from one application to another and controlled on the basis of the number of successive windings 27 on core 8.

By virtue of the fabric of band 21 reinforcing and supporting rubber 20, the maximum stretch and shrinkage of band 19 in direction B are extremely small, so that the radial dimension of each winding 27 of strip 18 about surface 7 is substantially constant, and layer 4 has a very small tolerance with respect to the desired radial thickness, which can be achieved with no material removal by further machining required.

Machine 14 by which to wind strip 18 is relatively straightforward and requires no sophisticated control programs to move head 16, since strip 18 is drawn by core 8 as it rotates about axis 3, and head 16 is moved in one direction A, as opposed to having two degrees of freedom as in known solutions in which the rubber of ablative material must actually be deposited on surface 7.

Moreover, as stated, the same machine 14 can be used to wind both strip 18 and the composite fiber material of shell 2, and also to cover cores of different shapes and sizes, with no major alterations to the machine 14 settings controlling head 16, and with no interference between head 16 and-portions 11 of core 8.

Excellent results are obtained regardless of the curvature of portions 11 of core 8 using strips 18 of different widths, which prevents any bulges or flaws which might be formed in layer 4 if wide strips were to be applied to portions 11. As stated, strips 18 are cut to desired widths, and are changeable by simply feeding the same head 16 with a different reel 26a, 26b, 26c.

As stated, on the one hand, layer 4 and shell 2 can be cured simultaneously in one operation, and, on the other, fibers 23 provide for excellent mechanical and thermal resistance of layer 4. For a given concentration of para-aramidic material, the resistance of layer 4 using strip 18 is even greater than that of ablative-material layers with para-aramidic flake additives.

Finally, by virtue of the tensile strength of band 21, excellent results are obtained over a wide range of strip 18 tensioning values.

Clearly, changes may be made to the method described with reference to the accompanying drawings without, however, departing from the scope of the present invention.

In particular, rubber 20 may be supported or reinforced otherwise than as described, e.g. by means of a number of separate continuous fibers, as opposed to fabric band 21; the fabric and/or fibers 23 may have a different weave from that shown, providing strip 18 is made substantially inextensible at least in longitudinal direction B; and/or fibers 23 may be made of material other than that shown, e.g. glass or carbon fibers.

Finally, strip 18 in the Figure 5 variation may be formed otherwise than as described, e.g. by embedding more than one fabric or fiber band in band 25 of uncured rubber.

## Claims

1. A method of producing a rocket engine insulated casing (1); the method comprising the step of forming a heat-insulating annular layer (4) by applying a heat-shielding material (20) to the outer surface (7) of a core (8); wherein the step of forming a heat-insulating layer includes the step of forming a strip (18) comprising said heat-shielding material (20) and substantially inextensible in at least the longitudinal extension direction (B) of the strip (18); said heat-shielding material (20) being applied by winding said strip (18) about said core (8) and tensioning said strip (18) during winding.

2. A method as claimed in Claim 1, **characterized in that** said strip (18) is wound by rotating said core (8) about an axis (3), and by exerting retaining action (T) on said strip (18) in the opposite direction to the rotation direction of said core (8).

3. A method as claimed in Claim 1 or 2, **characterized in that** said strip (18) is formed by mating a band of uncured heat-shielding material (19; 25), and reinforcing means (21) substantially inextensible in said longitudinal direction (B).

4. A method as claimed in Claim 3, **characterized in that** said strip (18) is formed by forming a fiber structure (21) extending in said longitudinal direction (B) and forming at least part of said reinforcing means (21); and by combining said fiber structure (21) and said band of uncured heat-shielding material (19; 25).

5. A method as claimed in Claim 4, **characterized in that** said fiber structure (21) and said band of uncured heat-shielding material (25) are combined by embedding said fiber structure (21) in said uncured heat-shielding material (20).

6. A method as claimed in Claim 4, **characterized in that** said fiber structure (21) and said band of uncured heat-shielding material (19) are combined by superimposing said band of uncured heat-shielding material (19) and said fiber structure (21).

7. A method as claimed in any one of Claims 4 to 6, **characterized in that** said fiber structure (21) is formed using continuous fibers (23) in said longitudinal direction (B).

8. A method as claimed in any one of Claims 4 to 7, **characterized in that** said fiber structure (21) is formed using para-aramidic fibers (23).

9. A method as claimed in any one of the foregoing Claims, **characterized by** also comprising the steps of curing said heat-shielding material (20), and forming a shell (2) outside said heat-insulating annular layer (4) by winding a composite fiber material on to said heat-insulating annular layer (4) and curing the wound composite material; said heat-shielding material (20) and said wound composite material being cured in one operation.

10. A method as claimed in any one of the foregoing Claims, **characterized in that** said heat-insulating annular layer (4) is formed using a first (18a) and at least a second (18b) strip of different widths.

11. A method as claimed in Claim 10, **characterized in that** forming said heat-insulating annular layer (4) comprises winding said first strip (18a) on to a cylindrical intermediate portion (10) of said core (8), and winding said second strip (18b) on to a dome-shaped end portion (11) of said core (8); said second strip (18b) being narrower than said first strip (18a).

12. A rocket engine insulated casing (1); the insulated casing comprising an outer shell (2) made of composite material, and a heat-insulating inner annular layer (4) comprising a heat-shielding material (20); and being **characterized by** also comprising reinforcing means (21) for reinforcing said heat-shielding material (20); said reinforcing means (21) being continuous circumferentially, and being embedded in said heat-shielding material (20).

13. An insulated casing as claimed in Claim 12, **characterized in that** said reinforcing means (21) comprise a fiber structure (21).

14. An insulated casing as claimed in Claim 13, **characterized in that** said fiber structure (21) comprises circumferentially continuous fibers (23).

15. An insulated casing as claimed in Claim 13 or 14, **characterized in that** said fiber structure (21) comprises para-aramidic fibers (23).

## Patentansprüche

1. Verfahren zum Herstellen eines isolierten Raketentriebwerkgehäuses (1), wobei das Verfahren den Schritt des Bildens einer wärmeisolierenden ringförmigen Schicht (4) durch Aufbringen eines wärmeabschirmenden Materials (20) auf die Außenfläche (7) eines Kerns (8) umfasst; wobei der Schritt des Bildens einer wärmeisolierenden Schicht den Schritt des Bildens eines Streifens (18) einschließt, der das wärmeabschirmende Material (20) aufweist und wenigstens in Längserstreckungsrichtung (B) des Streifens (18) im Wesentlichen nicht dehnbar ist; wobei das wärmeabschirmende Material (20) aufgebracht wird, indem der Streifen (18) um den Kern (8) gewickelt wird und der Streifen (18) während des Wickelns angezogen wird.

2. Verfahren nach Anspruch 1, **dadurch gekennzeichnet, dass** der Streifen (18) gewickelt wird, indem der Kern (8) um eine Achse (3) gedreht wird, und indem eine Haltewirkung (T) auf den Streifen (18) in entgegengesetzter Richtung zu der Drehrichtung des Kerns (8) ausgeübt wird.

3. Verfahren nach Anspruch 1 oder 2, **dadurch gekennzeichnet, dass** der Streifen (18) gebildet wird, indem ein Band aus ungehärtetem Wärme abschirmenden Material (19; 25), und ein Verstärkungsmittel (21), das in die Längsrichtung (B) im Wesentlichen nicht dehnbar ist, miteinander verbunden werden.

4. Verfahren nach Anspruch 3, **dadurch gekennzeichnet, dass** der Streifen (18) gebildet wird, indem eine Faserstruktur (21) gebildet wird, die sich in Längsrichtung (B) erstreckt und wenigstens einen Abschnitt des Verstärkungsmittels (21) bildet; und indem die Faserstruktur (21) und das Band aus ungehärtetem, Wärme abschirmenden Material (19; 25) kombiniert werden.

5. Verfahren nach Anspruch 4, **dadurch gekennzeichnet, dass** die Faserstruktur (21) und das Band aus ungehärtetem, Wärme abschirmenden Material (25) kombiniert werden, indem die Faserstruktur (21) in dem ungehärteten, Wärme abschirmenden Material (20) eingebettet wird.

6. Verfahren nach Anspruch 4, **dadurch gekennzeichnet, dass** die Faserstruktur (21) und das Band aus ungehärtetem Wärme abschirmenden Material (19) kombiniert werden, indem das Band aus ungehärtetem, Wärme abschirmenden Material (19) und die Faserstruktur (21) übereinander gelagert werden.

7. Verfahren nach einem der Ansprüche 4 bis 6, **dadurch gekennzeichnet, dass** die Faserstruktur (21) gebildet wird, indem in der Längsrichtung (B) fortlaufende Fasern (23) benutzt werden.

8. Verfahren nach einem der Ansprüche 4 bis 7, **dadurch gekennzeichnet, dass** die Faserstruktur (21) gebildet wird, indem Para-Aramid-Fasern (23) benutzt werden.

9. Verfahren nach einem der vorangehenden Ansprüche, **dadurch gekennzeichnet, dass** es auch die folgenden Schritte umfasst: Härten des Wärme abschirmenden Materials (20), und Bilden eines Mantels (2) außerhalb der Wärme isolierenden ringförmigen Schicht (4), indem ein Verbundfasermaterial auf die Wärme isolierende Schicht (4) gewickelt wird und das gewickelte Verbundmaterial gehärtet wird; wobei das Wärme abschirmende Material (20) und das gewickelte Verbundmaterial in einem Arbeitsschritt gehärtet werden.

10. Verfahren nach einem vorangehenden Ansprüche, **dadurch gekennzeichnet, dass** die Wärme isolierende ringförmige Schicht (4) gebildet wird, indem ein erster (18a) und wenigstens ein zweiter (18b) Streifen unterschiedlicher Breite benutzt wird.

11. Verfahren nach Anspruch 10, **dadurch gekennzeichnet, dass** das Bilden der Wärme isolierenden ringförmigen Schicht (4) das Wickeln des ersten Streifens (18a) auf einen zylindrischen intermediären Abschnitt (10) des Kerns (8), und das Wickeln des zweiten Streifens (18b) auf einen kuppelförmigen Endabschnitt (11) des Kerns (8) umfasst; wobei der zweite Streifen (18b) schmaler ist als der erste Streifen (18a).

12. Isoliertes Raketenantriebsgehäuse (1); wobei das isolierte Gehäuse einen äußeren Mantel (2) aufweist, der aus Verbundmaterial hergestellt ist, und eine Wärme isolierende innere ringförmige Schicht (4), die ein Wärme abschirmendes Material (20) aufweist; und **dadurch gekennzeichnet, dass** es auch Verstärkungsmittel (21) zum Verstärken des Wärme abschirmenden Materials aufweist; wobei das Verstärkungsmittel (21) in Umfangsrichtung fortlaufend ist, und in das Wärme abschirmende Material (20) eingebettet ist.

13. Isoliertes Gehäuse nach Anspruch 12, **dadurch gekennzeichnet, dass** das Verstärkungsmittel (21) eine Faserstruktur (21) aufweist.

14. Isoliertes Gehäuse nach Anspruch 13, **dadurch gekennzeichnet, dass** die Faserstruktur (21) in Umfangsrichtung fortlaufende Fasern (23) aufweist.

15. Isoliertes Gehäuse nach Anspruch 13 oder 14, **dadurch gekennzeichnet, dass** die Faserstruktur (21) Para-Aramid-Fasern (23) aufweist.

## Revendications

1. Procédé de production d'un boîtier isolé pour moteur de fusée (1) ; le procédé comprenant l'étape consistant à former une couche annulaire d'isolation thermique (4) en appliquant un matériau de protection thermique (20) sur la surface extérieure (7) d'un noyau (8) ; dans lequel l'étape de formation de la couche d'isolation thermique inclut l'étape consistant à former une bande (18) comprenant ledit matériau de protection thermique (20) et substantiellement inextensible au moins dans la direction d'extension longitudinale (B) de la bande (18), ledit matériau de protection thermique (20) étant appliqué par enroulement de ladite bande (18) autour dudit noyau (8) et par tension de ladite bande (18) pendant l'enroulement.

2. Procédé selon la revendication 1, **caractérisé en ce que** ladite bande (18) est enroulée en faisant tourner ledit noyau (8) autour d'un axe (3) et en exerçant une action de retenue (T) sur ladite bande (18) dans la direction opposée à la direction de rotation dudit noyau (8).

3. Procédé selon la revendication 1 ou 2, **caractérisé en ce que** ladite bande (18) est formée en accouplant une bande de matériau de protection thermique non durci (19 ; 25), et des moyens de renforcement (21) substantiellement inextensibles dans ladite direction longitudinale (B).

4. Procédé selon la revendication 3, **caractérisé en ce que** ladite bande (18) est formée en réalisant une structure fibreuse (21) s'étendant dans ladite direction longitudinale (B) et en formant au moins une partie desdits moyens de renforcement (21) et en combinant ladite structure fibreuse (21) et ladite bande de matériau de protection thermique non durci (19 ; 25).

5. Procédé selon la revendication 4, **caractérisé en ce que** ladite structure fibreuse (21) et ladite bande de matériau de protection thermique non durci (25) sont combinées en incorporant ladite structure fibreuse (21) dans ledit matériau de protection thermique non durci (20).

6. Procédé selon la revendication 4, **caractérisé en ce que** ladite structure fibreuse (21) et ladite bande de matériau de protection thermique non durci (19) sont combinées en superposant ladite bande de matériau de protection thermique non durci (19) et ladite structure fibreuse (21).

7. Procédé selon l'une quelconque des revendications 4 à 6, **caractérisé en ce que** ladite structure fibreuse (21) est formée en utilisant des fibres continues (23) dans ladite direction longitudinale (B).

8. Procédé selon l'une quelconque des revendications 4 à 7, **caractérisé en ce que** ladite structure fibreuse (21) est formée au moyen de fibres para-aramidiques (23).

9. Procédé selon l'une quelconque des revendications précédentes, **caractérisé en ce qu'**il comprend aussi les étapes consistant à faire durcir ledit matériau de protection thermique (20) et à former une coque (2) à l'extérieur de ladite couche annulaire d'isolation thermique (4) en enroulant un matériau de fibres composites sur ladite couche annulaire d'isolation thermique (4) et en faisant durcir le matériau composite enroulé ; ledit matériau de protection thermique (20) et ledit matériau composite enroulé étant durcis en une seule opération.

10. Procédé selon l'une quelconque des revendications précédentes, **caractérisé en ce que** ladite couche annulaire d'isolation thermique (4) est formée au moyen d'une première (18a) et d'au moins une seconde (18b) bandes de largeurs différentes.

11. Procédé selon la revendication 10, **caractérisé en ce que** la formation de ladite couche annulaire d'isolation thermique (4) comprend l'enroulement de ladite première bande (18a) sur une portion intermédiaire cylindrique (10) dudit noyau (8), et l'enroulement de ladite seconde bande (18b) sur une portion d'extrémité en forme de dôme (11) dudit noyau (8) ; ladite seconde bande (18b) étant plus étroite que ladite première bande (18a).

12. Boîtier isolé pour moteur de fusée (1), le boîtier isolé comprenant une coque extérieure (2) faite de matériau composite, et une couche annulaire intérieure d'isolation thermique (4) comprenant un matériau de protection thermique (20) ; et étant **caractérisé en ce qu'**il comprend aussi des moyens de renforcement (21) pour renforcer ledit matériau de protection thermique (20), lesdits moyens de renforcement (21) étant continus dans le sens circonférentiel et étant incorporés dans ledit matériau de protection thermique (20).

13. Boîtier isolé selon la revendication 12, **caractérisé en ce que** lesdits moyens de renforcement (21) comprennent une structure fibreuse (21).

14. Boîtier isolé selon la revendication 13, **caractérisé en ce que** ladite structure fibreuse (21) comprend des fibres continues dans le sens circonférentiel (23).

15. Boîtier isolé selon la revendication 13 ou 14, **caractérisé en ce que** ladite structure fibreuse (21) comprend des fibres para-aramidiques (23).
